# EUROPÄISCHE PATENTANMELDUNG

(11) **EP 1 856 963 A1**
(43) Veröffentlichungstag der Anmeldung: **21.11.2007**
(21) Anmeldenummer: 07009385.1
(22) Anmeldetag: 10.05.2007
(51) Int. Cl.: A01B 29/04

(54) **Landwirtschaftliche Bodenwalze**

(30) Priorität: 15.05.2006 DE 102006022536
(71) Anmelder: Amazonen-Werke H. Dreyer GmbH & Co. KG, 49205 Hasbergen (DE)
(72) Erfinder: Feldhaus, Werner, 27801 Dötlingen (DE); Tiessen, Reimer Uwe, 26135 Oldenberg (DE); Reinke, Wilfried, 26123 Oldenburg (DE); Steen, Rüdiger, 27798 Hude (DE)

(57) **Zusammenfassung**

Landwirtschaftliche Bodenwalze (1) mit einem Tragkörper (2) und mehreren von diesen beabstandet nebeneinander angeordneten Gummihohlreifen (5). Um eine Bodenwalze (1) zu schaffen, die die vorgeschilderten Nachteile nicht mehr aufweist, ist vorgesehen, dass jeweils in dem Zwischenraum zwischen zwei benachbarten Gummihohlreifen (5) ein diesen Zwischenraum verschließender Zwischenring (25) zumindest annähernd auf Höhe der radialen Außenhülle des Reifens (5) angeordnet ist.

## Beschreibung

Der Erfindung betrifft eine landwirtschaftliche Bodenwalze gemäß des Oberbegriffes des Patentanspruches 1.

Derartige landwirtschaftliche Bodenwalzen sind durch die EP 02 23 134 B1, DE 40 18 366 A1 oder EP 04 01 592 B1 bekannt. Diese Bodenwalzen bestehen aus einem drehbar gelagerten Tragrohr, auf dem beabstandet zueinander Gummihohlreifen angeordnet sind. Durch die beabstandete Anordnung der einzelnen Gummihohlreifen zueinander ist ein Zwischenraum zwischen den einander benachbarten Gummihohlreifen vorhanden. Dieser Zwischenraum weist in radialer Richtung eine größere Ausdehnung als in axialer Richtung auf. Das Problem besteht nun darin, dass sich in den Zwischenraum zwischen zwei Reifen Erde, Steine etc. festsetzen können. Hierdurch besteht die Gefahr, dass die Gummihohlreifen beschädigt werden und zum Zwecke der Selbstreinigung nicht mehr ausreichend walken können.

Der Erfindung liegt die Aufgabe zugrunde, eine Bodenwalze zu schaffen, die die vorgeschilderten Nachteile nicht mehr aufweist.

Diese Aufgabe wird erfindungsgemäß dadurch gelöst, dass jeweils in dem Zwischenraum zwischen zwei benachbarten Gummihohlreifen ein diesen Zwischenraum verschließender Zwischenring zumindest annähernd auf Höhe der Radialen Außenhülle des Reifens angeordnet ist. Infolge dieser Maßnahmen wird der in radialer Richtung eine größere Ausdehnung als in axialer Richtung aufweisende Zwischenraum zwischen dem benachbarten Reifen verschlossen. Hierdurch kann keine Erde, Steine etc. in den Zwischenraum zwischen benachbarten Gummihohlreifen eindringen und sich dort festsetzen.

Durch die DD 270 495 A1 sind Zwillingsreifen mit Zwischensteg für landwirtschaftliche Maschinen und Traktoren zur Aufrüstung eines bodenschonenden Fahrwerks bekannt.

In einer Ausführungsform ist vorgesehen, dass der Zwischenring an der Seitenflanke des Reifens angeordnet ist. Hierdurch ist kein separater Zwischenring erforderlich. Dies hat erhebliche Montagevorteile, weil der Zwischenring unmittelbar an der Seitenflanke des Reifens angeordnet ist.

Damit sichergestellt ist, dass der Zwischenring den Zwischenraum zwischen benachbarten Reifen sicher abdeckt, ist vorgesehen, dass der an der Seitenflanke angeordnete Zwischenring zumindest eine Breite aufweist, die der halben Breite des Zwischenraumes zwischen zwei benachbarten Reifen entspricht. Somit ist in jedem Fall sichergestellt, dass der Zwischenraum sicher nach außen verschlossen ist, damit keine Bodenteile oder Steine etc. in den Zwischenraum eindringen können.

Eine weitere Verbesserung des Verschließens des Zwischenringes wird dadurch erreicht, dass der Zwischenring gegen die gegenüberliegende Seitenflanke des benachbarten Reifens gedrückt wird, so dass der Zwischenraum zwischen zwei benachbarten Reifen abdichtend verschlossen ist.

In einer anderen Ausführungsform ist vorgesehen, dass der Zwischenring gegen die gegenüberliegende Seitenflanke des benachbarten Reifens gedrückt wird, so dass der Zwischenraum zwischen zwei benachbarten Reifen abdichtend verschlossen ist. Hierdurch ist der Zwischenring einteilig ausgebildet.

Um den Zwischenraum zwischen benachbarten Gummihohlreifen zu verschließen, ist vorgesehen, dass der Zwischenring abdichtend zwischen den Seitenflanken benachbarter Reifen angeordnet ist.

Um eine sichere Anordnung der Zwischenringe zwischen den Gummihohlreifen zu erreichen, ist vorgesehen, dass die Reifen mit den Zwischenringen abdichtend gegeneinander verspannt sind.

Um auch unter schwierigsten Bedingungen eine sichere Fixierung des Zwischenringes zwischen dem benachbarten Gummihohlreifen zu erreichen, ist vorgesehen, dass die Seitenflanke, gegen die der Zwischenring gedrückt wird, eine Ringnut aufweist, in welche der Zwischenring fasst.

Um eine exakte Ausrichtung und Abdichtung der Zwischenringe zu erreichen, ist vorgesehen, dass die einander benachbarten Seiten der Zwischenringe zumindest eine ineinander fassende Ringnut und Ringerhebung aufweisen. Hierdurch wird ein Formschluss erreicht.

Eine sichere Anordnung der Zwischenringe zwischen den einander benachbarten Hohlreifen lässt sich dadurch erreichen, dass die Distanzelemente derart ausgestaltet sind, dass die Zwischenringe gegenüber oder gegen den benachbarten Reifen unter Spannung stehend gedrückt werden.

Damit die Gummihohlreifen und/oder die Zwischenringe sich nicht gegeneinander verdrehen können, ist vorgesehen, dass die Zwischenringe einander oder die Seitenwand des benachbarten Reifens ineinander greifende Verzahnungselemente aufweisen.

Um die Gummihohlreifen über ein Ventil mit Luftdruck in einfacher Weise aufschlagen zu können, ist vorgesehen, dass in dem Zwischenring zumindest ein in radialer Richtung ausgerichteter Durchbruch angeordnet ist, dass der jeweilige Gummihohlreifen über das zu dem Durchbruch geführte und mit dem Ventil verschlossene Leitung mit Luftdruck beaufschlagbar ist, dass das Ventil in dem Durchbruch angeordnet ist.

Um das Ventil während der Arbeit in dem Durchbruch geschützt unterzubringen, ist vorgesehen, dass der Durchbruch mit einem Verschlusselement verschließbar ist.

Weitere Einzelheiten der Erfindung sind der Beispielsbeschreibung und den Zeichnungen zu entnehmen. Hierbei zeigen
- Fig. 1: die Bodenwalze in der Vorderansicht,
- Fig. 2: die Bodenwalze in Seitenansicht,
- Fig. 3: die Bodenwalze im Schnitt III - III,
- Fig. 4: die Bodenwalze im Schnitt III - III und in Explosionsdarstellung,
- Fig. 5: den mittleren Gummihohlreifen im Schnitt III - III,
- Fig. 6: das Distanzelement in perspektivischer Darstellung,
- Fig. 7: die Anordnung der Reifenelemente zueinander mit der Anordnung der Luftleitungen ohne Tragrohr und ohne Distanzelementen,
- Fig. 8: die Reifenwalze gemäß Fig. 7 in Seitenansicht,
- Fig. 9: die Anordnung des Ventils in der Ansicht IX - IX und im vergrößertem Maßstab
- Fig. 10: das Detail X in vergrößerter Darstellung gemäß Fig. 7,
- Fig. 11: eine weitere Bodenwalze gemäß Schnitt III - III,
- Fig. 12: das mittlere Reifenelement gemäß Fig. 11 im Schnitt,
- Fig. 13: eines der äußeren Reifenelemente gemäß Fig. 11 im Schnitt
- Fig. 14: die beabstandet angeordneten Reifenelemente der Bodenwalze gemäß Fig. 11 im Schnitt,
- Fig. 15: eine weitere Bodenwalze gemäß Schnitt III/III,
- Fig. 16: die Bodenwalze gemäß Fig., 15 im Schnitt gemäß III/III und in Explosionsdarstellung,
- Fig. 17: ein Gummihohlreifen gemäß der Bodenwalze nach Fig. 15 im Schnitt und vergrößertem Maßstab,
- Fig. 18: das Detail Y entsprechend des Gummihohlreifens gemäß Fig. 17,

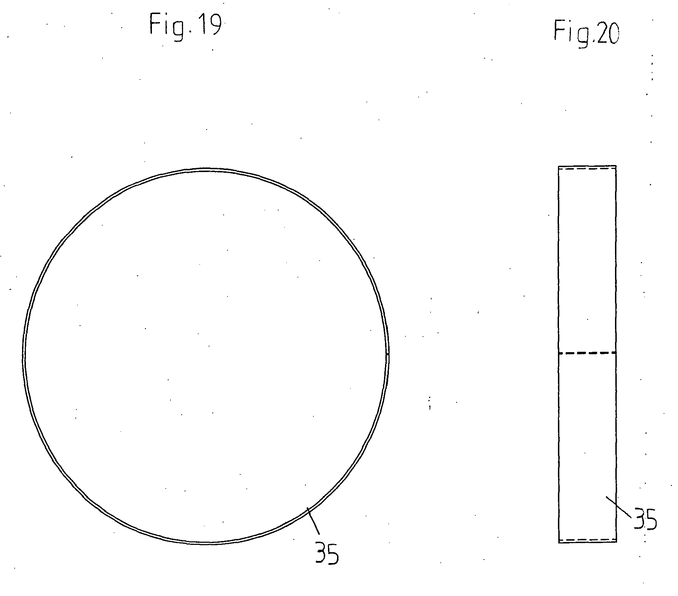

- Fig. 19: den Zwischenring der Bodenwalze gemäß Fig. 15 in Seitenansicht
- Fig. 20: den Zwischenring gemäß der Bodenwalze nach Fig. 15 in Vorderansicht,
- Fig. 21: ein weiterer Zwischenring in Seitenansicht,
- Fig. 22: den Zwischenring gemäß Fig. 21 im Schnitt XXII/XXII und
- Fig. 23: das Detail Z des Zwischenringes gemäß Fig. 22.

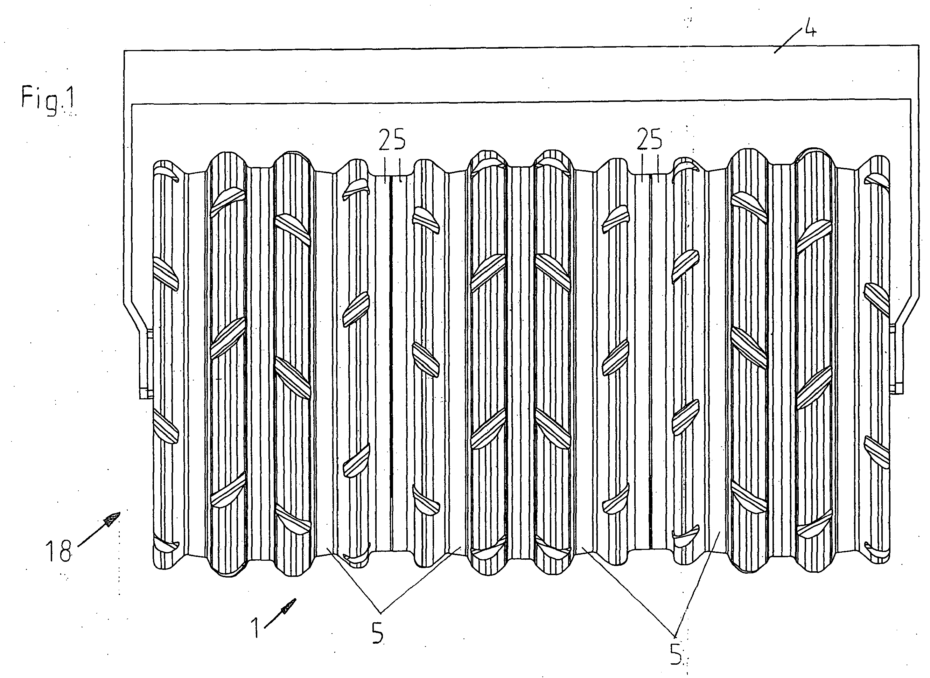

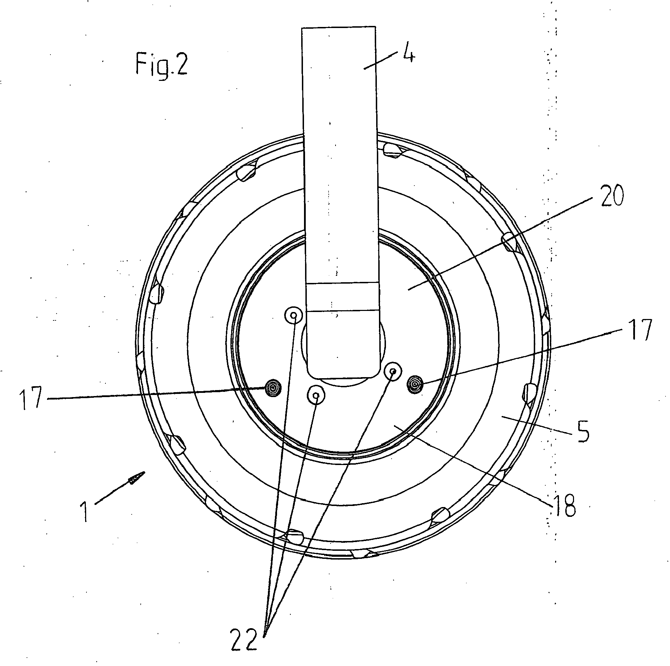

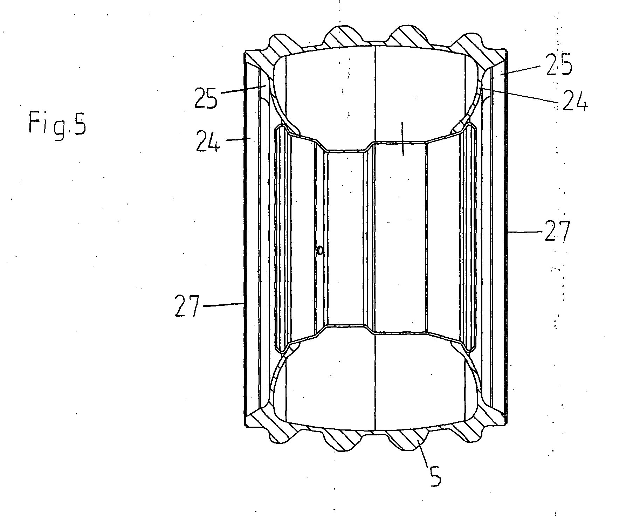

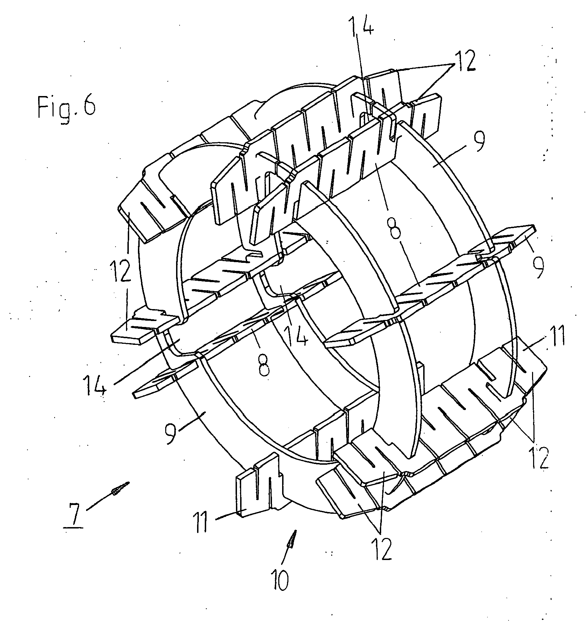

Die landwirtschaftliche Bodenwalze 1 gemäß den Fig. 1 bis 10 weist einen Tragkörper 2 auf, der mittels Lager 3 an einem Tragrahmen 4 frei drehbar gelagert ist. Auf dem Tragkörper 2, der aus einem rohrförmigen Stahlkörper besteht, sind drei Gummihohlreifen 5 nebeneinander angeordnet. Die Gummihohlreifen 5 sind auf einer Felge 6 angeordnet. Die Felgen 6 sind auf den Tragkörper 1 aufgeschoben, so dass sie den Tragkörper 2 umgeben. Die Felgen 5 bilden zusammen mit den Gummihohlreifen 5 und dem als Tragrohr 2 ausgebildeten Tragkörper eine drehbare Einheit. Zwischen dem einander benachbarten Felgen 6 der Gummihohlreifen 5 sind die Gummihohlreifen 5 und die Felgen 6 auf Abstand zueinander haltende Distanzelemente 7 angeordnet. Die Distanzelemente 7 und die Felgen 6 mit den Gummihohlreifen 5 werden abwechselnd auf den als Tragrohr ausgebildeten Tragkörper 2 aufgeschoben.

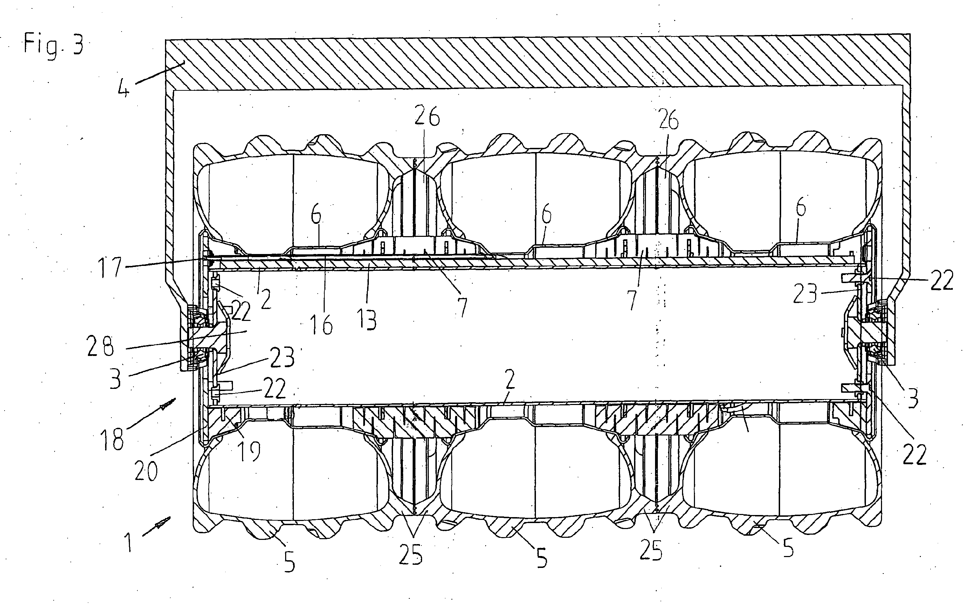

Damit die Felgen 6 mit den Gummihohlreifen 5 leicht auf den Tragkörper 2 aufgeschoben werden, weisen die Felgen 6 in ihrem inneren Bereich einen größeren Innendurchmesser als der Außendurchmesser des Tragkörpers 2 auf. Somit ist der dem Tragkörper 2 zugewandte Bereich der Felgen 6 beabstandet zu dem Tragkörper 2 angeordnet. Die Distanzelemente 7 weisen einen dem Außendurchmesser des Tragkörpers 2 in etwa entsprechenden Innendurchmesser auf. Die Distanzelemente 7 bestehen aus plattenförmigen Elementen 8, die durch ringförmige Halter 9 zu einem käfigartigen Gebilde 10 miteinander verbunden sind. Der Hüllkörper der Distanzelemente 7 weist auf seiner jeweiligen axialen Außenseite 11, die mit den Felgen 6 zusammenwirkt, eine konusförmige Form 12 auf. Hierbei ist der mit den Felgen 6 zusammenwirkende Bereich der Distanzelemente 7 mit an einer an die äußere Außenkontur der Felgen 6 angepasste Form ausgebildet, wie die Fig. 3 bis 6 zeigen.

Die Distanzelemente 7 sind also keilförmig unter die Felgen verschiebbar, um die Felgen 6 mit dem Tragkörper 2 verspannen zu können.

Auf dem Tragkörper 2 sind mehrere, im Ausführungsbeispiel drei sich in axialer Richtung des Tragkörpers 2 erstreckende und aus dem Tragkörper 2 herausragende Erhebungen 13 angeordnet. Diese Erhebung 13 kann im Querschnitt U-förmig, rohrförmig oder flach ausgebildet sein. Im Ausführungsbeispiel ist diese Erhebung 13 als auf dem Tragkörper 2 aufgeschweißtes Flacheisen ausgebildet.

Die Halteringe 9 der Distanzelemente 7 weisen an den Erhebungen 13 angepasste bzw. den Erhebungen 13 entsprechende Aussparungen 14 auf. Diese Aussparungen 14 sind jedoch in radialer Richtung größer als die Erstreckung der Erhebung 13 ausgebildet, um, wie noch weiter erläutert wird, durch diesen vergrößerten Aussparungsbereich 15 oberhalb der Erhebungen 13 die zum Befüllen der Gummihohlreifen 5 erforderlichen Luftleitungen 16 nach außen führen zu können.

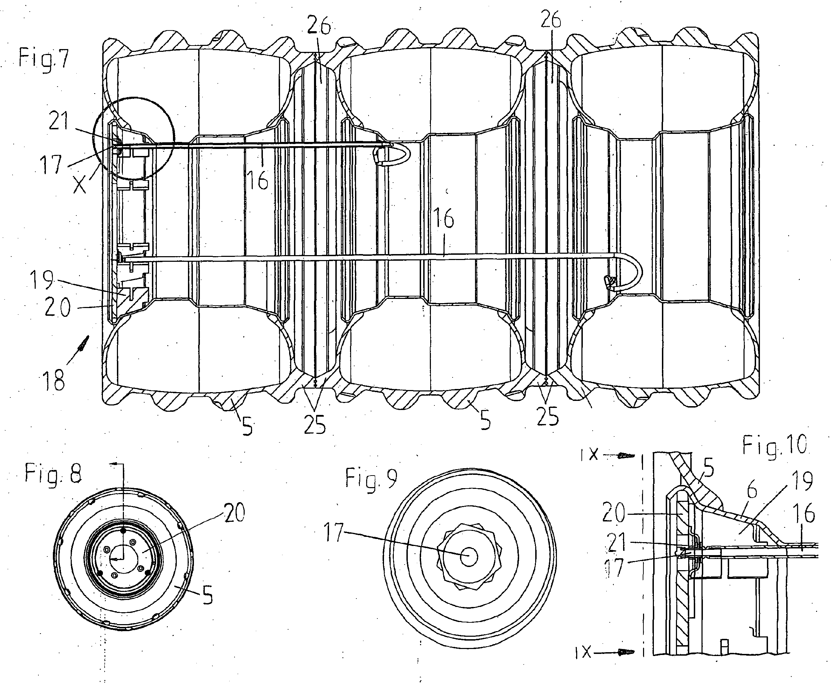

Jedem Gummihohlreifen 5 ist ein über eine Luftleitung 16 verbundenes Ventil 17 zugeordnet, um den jeweiligen Gummihohlreifen 5 mit dem gewünschten Luftdruck beaufschlagen zu können. An jedem Gummihohlreifen 5 bzw. Felge 6 wird eine Luftleitung 16 angeschlossen, die nach außen zur Stirnseite 18 der Walze 1 zu dem stirnseitigen Distanzelement 19 geführt ist und deren äußeres Ende mit dem Ventil 17 versehen ist. Wie die Fig. 7, 9 und 10 zeigen, ist das Ventil 17 bis zu einer in der stirnseitigen Spannplatte 20 des stirnseitigen Distanzelementes 19 angeordneten Öffnung 21 geführt und dort beispielsweise mit einer Schraubverbindung 22 befestigt. Zusätzlich kann die Öffnung 21 zum Schutz des Ventils 17 mit einer nicht dargestellten Verschlusskappe abgedeckt sein.

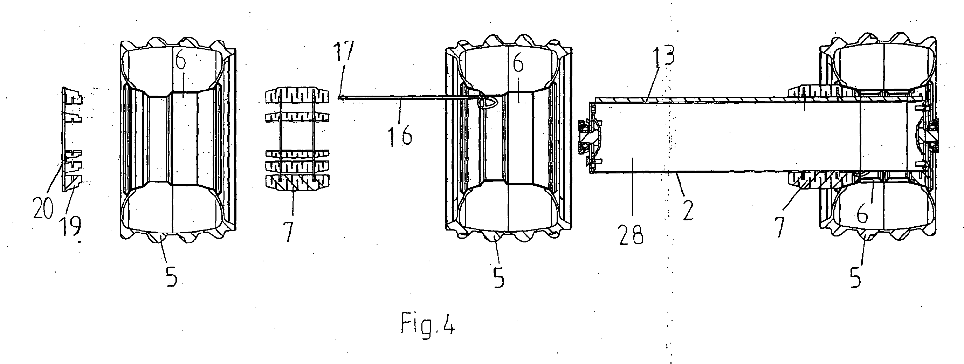

Wenn die Gummihohlreifen 5 abwechselnd mit den Distanzelementen 7 auf das Tragrohr 2 entsprechend den Fig. 3 und 4 aufgeschoben sind, wird von beiden Stirnseiten 18 der Bodenwalze 1 das stirnseitige Distanzelement 19 mit der Stirnplatte 20 mit dem Tragkörper 2 durch beispielsweise als Schrauben 22 ausgebildeten Spannmitteln verschraubt. Hierzu sind im stirnseitigen Bereich des Tragkörpers 2 entsprechende Aufnahmenelemente 23 für die Verschraubung und Verspannung angeordnet. Mittels der Schrauben 23 und der stirnseitigen Distanzelemente 19 werden die Felgen 6 mit den Distanzelementen 7 in axialer Richtung miteinander verspannt. Die Schrauben 22 bilden die Spannelemente zum Verspannen der Distanzelemente 19 mit den Felgen 6. Durch das axiale Verspannen schieben sich die konusförmigen Bereiche 12 der Distanzelemente 7 zwischen die Felgen 6 und den Tragkörper 2 hinein. Durch die entsprechende konische Ausgestaltung der Felgen 6 und der Distanzelemente 7 zueinander, und dem Verspannen gegeneinander werden die Distanzelemente 7 gegen die Felgen 6 und dem Tragkörper 2 gedrückt, so dass die Distanzelemente 7 sowohl an dem Tragkörper 2 wie auch an der Felge 6 zur Anlage kommen. Hierdurch erhalten die Felgen 6 einen festen Sitz auf dem Tragkörper 2.

Durch die auf dem Tragkörper 2 angebrachte Erhebung 13 in Verbindung mit den Aussparungen 14 in den Halteringen 9 der Distanzelemente 7 wird eine Art formschlüssige Verdrehsicherung der Distanzelemente 7 und der Felgen 6 mit dem Gummihohlreifen 5 auf dem Tragkörper 2 gewährleistet.

Die Spannelemente 22 drücke die stirnseitig an den Tragkörper 2 angeordneten und axial gegenüber dem Tragkörper 2 verstellbaren kreisförmige Ringe 20 mit dem Distanzelementen 19 gegen die Felgen 6 ausgebildet, um so die Felgen 6 mit den Distanzelementen 7 auf dem Tragkörper 2 zu verspannen.

Die Distanzelemente 7 sind mit den Felgen 6 derartig aufeinander abgestimmt, dass die Gummihohlreifen 5 auf den Felgen 6 in dem gewünschten Abstand zueinander auf dem Tragkörper 2 zu Bildung der Bodenwalze angeordnet sind.

Auf den einander benachbarten Seitenflächen 24 der Gummihohlreifen 5 sind den Gummihohlreifen 5 verbreiternde Zwischenringe 25 angeordnet, um den Zwischenraum 26 zwischen benachbarten Gummihohlreifen 5 im radialen-äußeren Bereich zu verschließen. Zwischenringe 25 sind in Zwischenraum 26 zwischen zwei benachbarten Gummihohlreifen angeordnet. Die Zwischenringe 25 sind auf Höhe der radialen Außenhülle des Reifens 5 befestigt. Auf jeder Seite des Gummihohlreifens 5 ist ein Zwischenring 25 angeordnet, der Zwischenring 25 weist zumindest eine Breite auf, die der halben Breite des Zwischenraumes 26 zwischen zwei benachbarten Reifen 5 entspricht. Hierbei sind dann die Distanzringe 7 derartig in Verbindung mit den Felgen 6 ausgelegt, dass die Außenflächen 27 der an den Gummihohlreifen 5 angeordneten Zwischenringe 25 in gewünschter Weise ausreichend dicht einander anliegen, damit sie den Hohlraum 26 zwischen den benachbarten Gummihohlreifen 5 verschließen, so dass keine Erde oder sonstige Gegenstände in diesen Bereich 26 eindringen können. Somit sind die Zwischenringe 25 der einander benachbarten Reifen derart gegeneinander gedrückt, so dass der Zwischenraum 26 von zwei benachbarten Reifen 5 abdichtend geschlossen ist. Hierbei sind die Distanzelemente 7 derart ausgestaltet, dass die Zwischenringe unter Spannung gegeneinander gedrückt werden.

Entgegen der Darstellung in den Fig. 1-10 kann die Luftleitung 16 mit dem Ventil 17 zu einem nicht dargestellten Durchbruch in den Zwischenring 25 geführt und dort angeordnet sein. Dieser Durchbruch, ist dann mit einem Verschlusselement verschlossen, damit das Ventil nicht beschädigt werden kann und keine Fremdkörper in das Ventil eindringen können.

In dem Hohlraum 28 des Tragkörpers 2 kann in nicht dargestellter Weise ein Bremselement angeordnet sein, um die die Bodenwalze 1, insbesondere wenn sie als Fahrwerk für eine gezogene landwirtschaftliche Arbeitsmaschine oder Verteilmaschine dient, gegenüber dem Tragrahmen 4 gebremst werden kann.

Des Weiteren kann in nicht dargestellter Weise der Hohlraum 26 des Tragkörpers 2 zumindest teilweise mit einem die Walze 1 ballastierenden Material befüllt werden, so dass die Verdichtungsarbeit der Bodenwalze 1 an die herrschenden Bedingungen in gewünschter Weise angepasst werden kann.

Die einander zugewandten Seiten der Zwischenringe oder die den Zwischenring zugewandte Seitenwand des benachbarten Reifens können in nicht dargestellter Weise ineinander greifende Verzahnungselemente aufweisen.

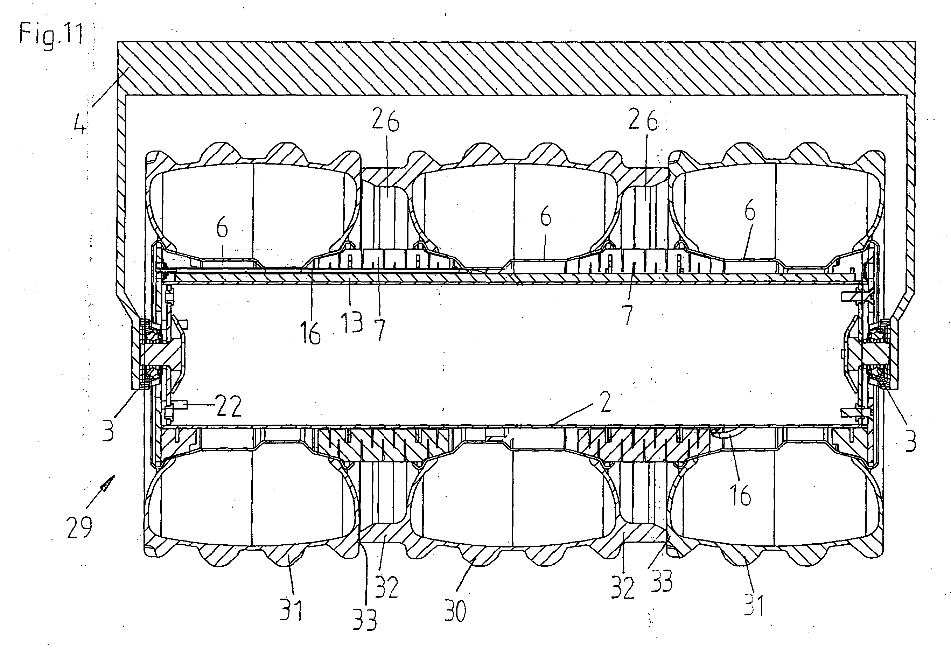

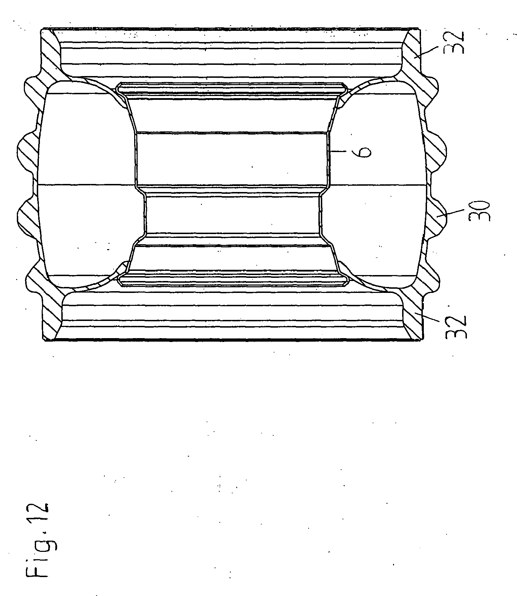

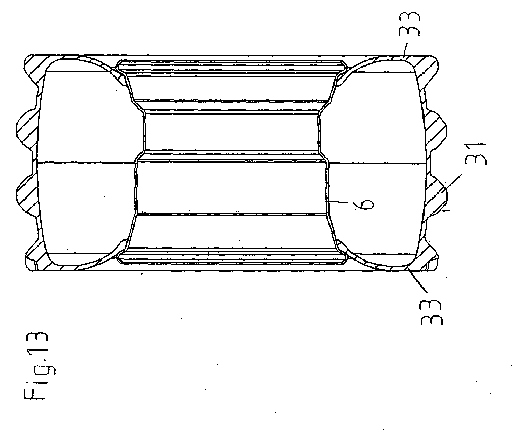

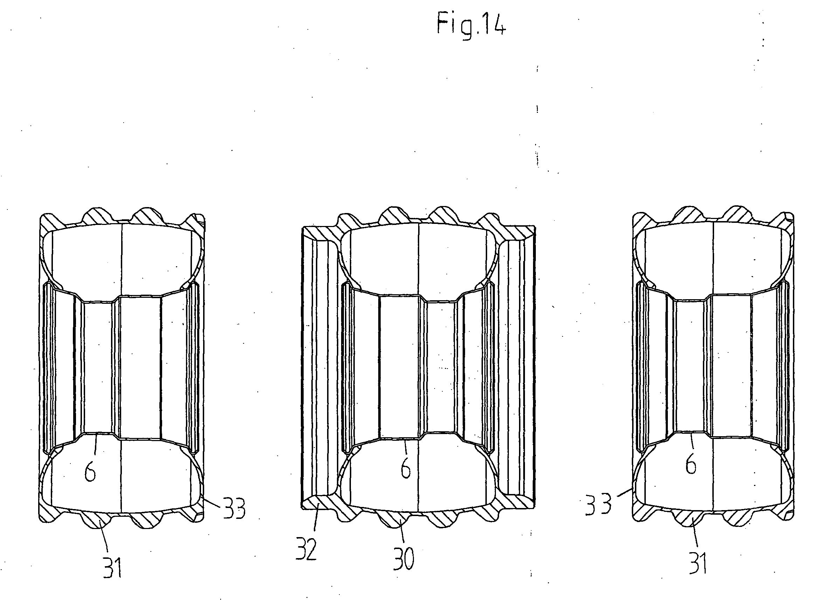

Die Bodenwalze gemäß den Fig. 11-14 unterscheidet sich von der Bodenwalze 29 gemäß den Fig. 1-10 dadurch, dass nur an dem mittleren Gummihohlreifen 30 ein den gesamten Zwischenraum 26 zwischen den einander benachbarten Gummihohlreifen 30 und 31 sich befindlichen Zwischenraum 26 abdichtend verschließen und diesen über deckender Zwischenring 32 angeordnet ist. Die Reifen 30, 31 werden ebenfalls mit dem jeweiligen Zwischenring 32 abdichtend gegeneinander in vorbeschriebener Weise verspannt, damit keine Fremdkörper, Boden etc. in den Zwischenraum 26 eindringen kann. Der Zwischenring 32 wird also gegen die gegenüberliegende Seitenflanke 33 des benachbarten Reifens 31 gedrückt, so dass der Zwischenraum 26 zwischen zwei benachbarten Reifen 30, 31 abdichtend verschlossen ist.

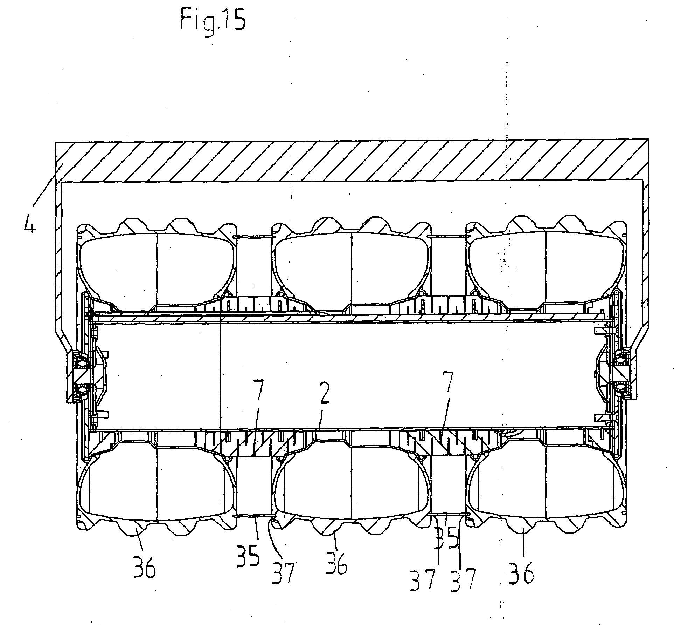

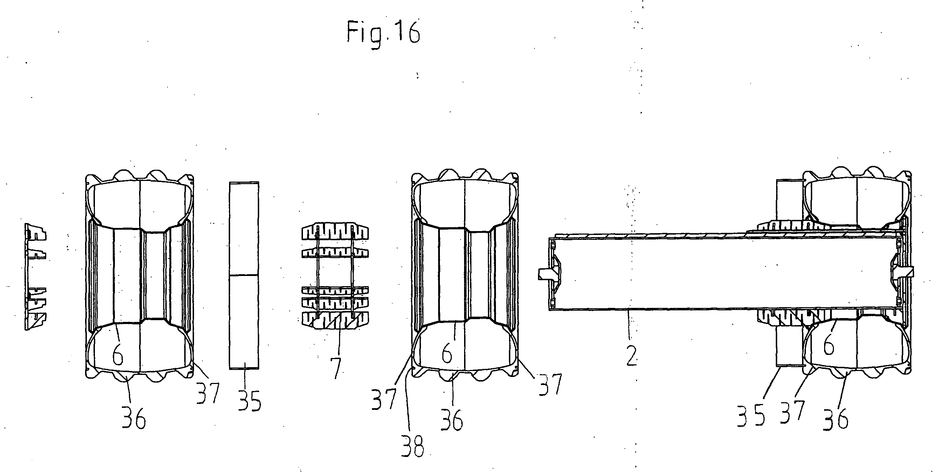

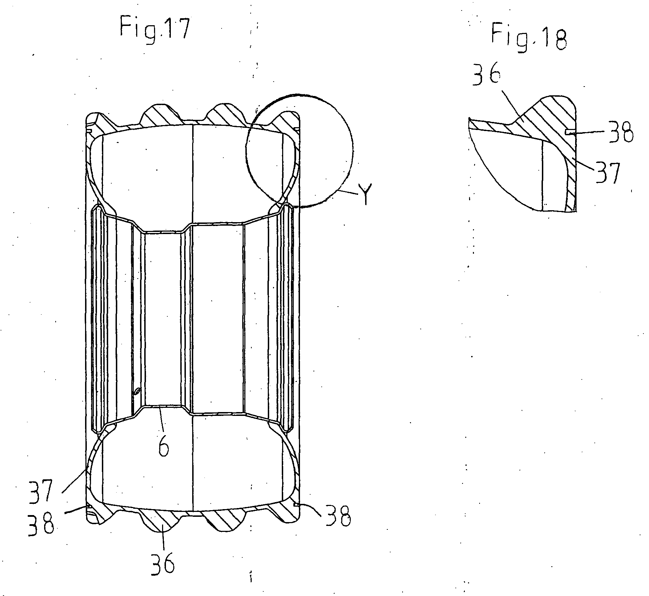

Die Bodenwalze 34 gemäß den Fig. 15-18 unterscheidet sich von der Bodenwalze gemäß den Fig. 1-10 durch eine andere Ausgestaltung des Zwischenringes. Der Zwischenring 35, der den Zwischenraum 26 zwischen zwei benachbarten Gummihohlreifen 36 verschließt, ist nicht an der Seitenwand 37 eines Gummihohlreifens 36 angeordnet, sondern als separates Bauteil ausgebildet. Zur exakten Anordnung des Zwischenringes 35 gegenüber den Gummihohlreifen 36 und dem Tragrohr 2 weist jeder Gummihohlreifen 36 in seinem äußeren radialen Bereich der Seitenflanke 37 eine Ringnut 38 auf, in welcher der Zwischenring 35 fasst.

Hierbei sind die Gummihohlreifen 36 und der Zwischenring 35 derart zueinander ausgerichtet, dass eine sichere Anordnung des Zwischenringes 35 in der Ringnut 38, die sich in den Seitenflanken 37 der Gummihohlreifen 36 befindet, angeordnet ist.

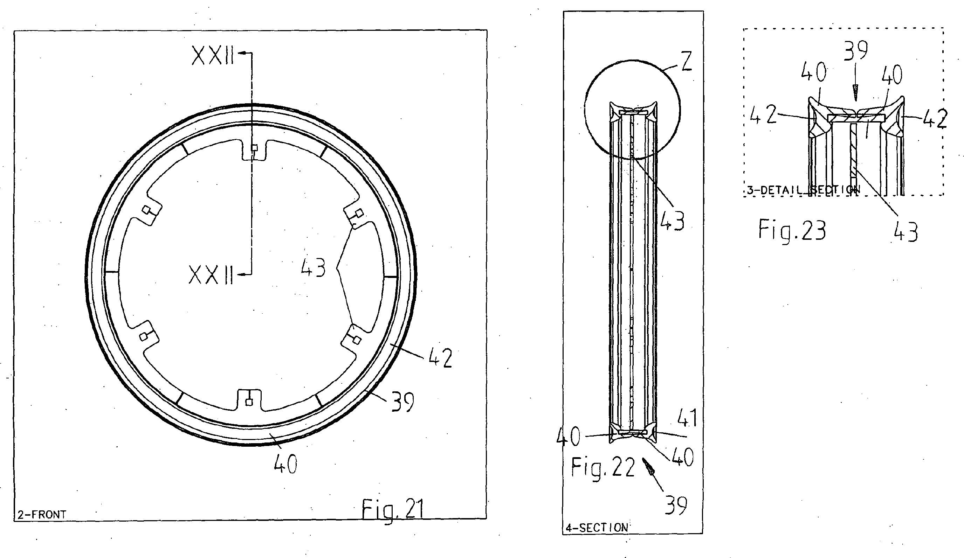

In den Fig. 21-23 ist ein weiterer Zwischenring 39 dargestellt, der zwischen einander benachbarten Gummihohlreifen 31 zum verschließen des Zwischenraumes 26 zwischen einander benachbarten Hohlreifen 31 angeordnet ist.

Dieser Zwischenring 39 ist aus zwei Halbhälften 40 mit einem innen angeordneten Verbindungsring 41 zusammengesetzt. In dem äußeren umlaufenden radialen Bereich weist der Zwischenring 39 eine an die radialen Außenseiten der Gummihohlreifen 41 angepasstes Profil-Struktur in Form einer flachen Ringnut 42 auf. Zur Fixierung des Zwischenringes 39 gemäß den Fig. 21 und 23 in Bezug auf die Gummihohlreifen 31 und dem Tragrohr 2 in radialer Richtung sind an dem Verbindungsring 41 für die Teilhälften 40 des Zwischenringes 39 Stege 43 angeordnet, an welcher in nicht dargestellter Weise Verbindungsstreben, die sich auf dem Tragrohr abstützen, angeordnet werden.

## Patentansprüche

1. Landwirtschaftliche Bodenwalze mit einem Tragkörper und mehreren von diesen beabstandet nebeneinander angeordneten Gummihohlreifen, **dadurch gekennzeichnet, dass** jeweils in dem Zwischenraum (26) zwischen zwei benachbarten Gummihohlreifen (5, 30, 31, 36) ein diesen Zwischenraum (26) verschießender Zwischenring (25, 32, 35, 39) zumindest annähernd auf Höhe der radialen Außenhülle des Reifens (5, 30, 31, 36) angeordnet ist.

2. Bodenwalze nach Anspruch 1, **dadurch gekennzeichnet, dass** der Zwischenring (25, 32) an der Seitenflanke des Reifens (5, 30) angeordnet ist.

3. Bodenwalze nach einem oder mehreren der vorstehenden Ansprüche, **dadurch gekennzeichnet, dass** der an der Seitenflanke angeordnete Zwischenring (25) zumindest eine Breite aufweist, die der halben Breite des Zwischenraumes (26) zwischen zwei benachbarten Reifen (5), entspricht.

4. Bodenwalze nach Anspruch 3, **dadurch gekennzeichnet, dass** die Zwischenringe (25) der einander benachbarten Reifen (5) gegeneinander gedrückt werden, so dass der Zwischenraum (26) von zwei benachbarten Reifen (5) abdichtend geschlossen ist.

5. Bodenwalze nach Anspruch 2, **dadurch gekennzeichnet, dass** der Zwischenring (32) gegen die gegenüberliegende Seitenflanke (33) des benachbarten Reifens (31) gedrückt wird, so dass der Zwischenraum (26) zwischen zwei benachbarten Reifen (30, 31) abdichtend verschlossen ist.

6. Bodenwalze nach Anspruch 1, **dadurch gekennzeichnet, dass** der Zwischenring (35, 39) abdichtend zwischen den Seitenflanken (37) benachbarter Reifen (5, 36) angeordnet ist.

7. Bodenwalze nach einem oder mehreren der vorstehenden Ansprüche, **dadurch gekennzeichnet, dass** die Reifen (5, 30, 31, 36) mit den Zwischenringen (25, 32, 35, 39) abdichtend gegeneinander verspannt sind.

8. Bodenwalze nach einem oder mehreren der vorstehenden Ansprüche, **dadurch gekennzeichnet, dass** die Seitenflanke(37), gegen die der Zwischenring (35) gedrückt wird, eine Ringnut (38) aufweist, in welche der Zwischenring (35) fasst.

9. Bodenwalze nach einem oder mehreren der vorstehenden Ansprüche, **dadurch gekennzeichnet, dass** die einander benachbarten Seiten der Zwischenringe zumindest eine ineinander fassende Ringnut und Ringerhebungen aufweisen.

10. Bodenwalze nach einem oder mehreren der vorstehenden Ansprüche, **dadurch gekennzeichnet, dass** die Distanzelemente (7) derart ausgestaltet sind, dass die Zwischenringe (25, 32, 35, 39) gegenüber oder gegen den benachbarten Reifen (5, 30, 31, 36) unter Spannung stehend gedrückt werden.

11. Bodenwalze nach einem oder mehreren der vorstehenden Ansprüche, **dadurch gekennzeichnet, dass** die Zwischenringe einander oder die Seitenwand des benachbarten Reifens ineinander greifende Verzahnungselemente aufweisen.

12. Bodenwalze nach einem oder mehreren der vorstehenden Ansprüche, wobei die Gummihohlreifen über ein Ventil mit Luftdruck beaufschlagbar sind, **dadurch gekennzeichnet, dass** in dem Zwischenring zumindest ein in radialer Richtung ausgerichteter Durchbruch angeordnet ist, dass der jeweilige Gummihohlreifen über das zu dem Durchbruch geführte und mit dem Ventil (17) verschlossene Leitung (16) mit Luftdruck beaufschlagbar ist, dass das Ventil (17) in dem Durchbruch angeordnet ist.

13. Bodenwalze nach Anspruch 12, **dadurch gekennzeichnet, dass** der Durchbruch mit einem Verschlusselement verschließbar ist.
